# EUROPÄISCHE PATENTSCHRIFT

(11) **EP 0 554 783 B1**
(45) Veröffentlichungstag und Bekanntmachung des Hinweises auf die Patenterteilung: **02.10.1996**
(21) Anmeldenummer: 93101247.0
(22) Anmeldetag: 28.01.1993
(51) Int. Cl.: B01J 19/18, C08F 2/06

(54) **Verfahren zur kontinuierlichen Polymerisation von Vinylmonomeren**
Method for continuous polymerisation of vinyl monomers
Procédé continu de polymérisation de monomères de vinyle

(30) Priorität: 06.02.1992 DE 4203277; 06.02.1992 DE 4203278
(43) Veröffentlichungstag der Anmeldung: 11.08.1993
(73) Patentinhaber: BASF Aktiengesellschaft, 67063 Ludwigshafen (DE)
(72) Erfinder: Erdmann Kempter, Fritz, Dr., W-6800 Mannheim 1 (DE); Niessner, Manfred, Dr., W-6707 Schifferstadt (DE); Diener, Ralph, Dr., W-6731 St. Martin (DE); Thiele, Heino, Dr., W-6700 Ludwigshafen (DE); Weiss, Wolfram, Dr., W-6704 Mutterstadt (DE); Renz, Hans, Dr., W-6701 Meckenheim (DE)

(56) Entgegenhaltungen:
- DE-A- 1 545 077
- DE-A- 1 905 919
- DE-A- 2 140 081
- GB-A- 715 666
- GB-A- 1 092 844
- MARK H.F., OTHMER D.F., OVERBERGER C.G., SEABORG G.T. 'kirk-othmer encyclopedia of chemical technology, 3rd ed., vol. 1' 1978 , WILEY & SONS , NEW YORK, US Seiten 386-408: "Acrylic ester polymers"

## Beschreibung

Die Erfindung betrifft ein kontinuierliches Verfahren zur Polymerisation von Vinylmonomeren unter Bildung von Vinylpolymeren mit einem mittleren Molekulargewicht Mₙ von 1000 bis 20 000.

Verfahren zur kontinuierlichen Polymerisation von Vinylmonomeren mit geringem Molekulargewicht im Bereich hoher Verfahrenstemperaturen sind bereits bekannt.

Es handelt sich dabei im wesentlichen um kontinuierlich betriebene Kesselverfahren, die in Masse oder mit niedrigen Anteilen an Lösungsmitteln durchgeführt werden.

Die Verfahrensprodukte werden zur Herstellung von Überzugsmitteln auf dem Lackgebiet, Papierbeschichtungsmitteln, Druckfarben, Klebstoffen, Bodenpflegemitteln und Hilfsmitteln eingesetzt.

Aus der DE-A 3 034 171 ist bekannt, Copolymerisate aus aromatischen Monoolefinen und carboxylgruppenhaltigen Monomeren mit einem mittleren Molekulargewicht von 500 bis 5.000 bei Temperaturen zwischen 200 und 400°C in Abwesenheit von Initiatoren herzustellen. Als Reaktor wird ein Druckkessel mit einem nachgeschalteten Druckrohr eingesetzt.

Aus der DE-A 27 28 459 sind Acrylatharze mit einem Molekulargewicht Mₙ zwischen 1500 und 3000 und einem Polydispersitätswert M_{w}/Mₙ zwischen 1,5 und 2,0 bekannt. Die Polymerisation erfolgt in einem Rührkessel mit einem nachgeschalteten statischen Mischer.

Das in der DE-A 2 502 172 beschriebene Verfahren zur Herstellung von Copolymerisaten mit geringem Molekulargewicht, welche als Papierleimungsmittel Verwendung finden, wird ebenfalls in einem Druckkessel mit nachgeschaltetem Druckrohr ausgeführt.

Zur Vermeidung von Anbackungen an den Reaktorwänden werden in der DE-A 3 026 831 periodische Druckschwankungen in der oben beschriebenen Reaktorkombination empfohlen.

Aus der EP-B 68 024, EP-96 901 und EP 156 170 sind ebenfalls Verfahren zur radikalischen Polymerisationen bei hohen Temperaturen in einem Rührkessel bekannt. Die Copolymerisate weisen ein geringes Molekulargewicht und eine enge Molekulargewichtsverteilung auf.

Die bisher bekannten kontinuierlichen Polymerisationsverfahren zur Herstellung von Polymeren mit geringem Molekulargewicht und enger Molekulargewichtsverteilung werden sämtlich in Rührkesseln durchgeführt.

Die Polymerisation im Rührkessel ist jedoch mit einigen Schwierigkeiten verbunden, insbesondere derjenigen, bei der üblicherweise exothermen Polymerisation, insbesondere von Acrylmonomeren, die bei hohen Temperaturen und kurzen Reaktionszeiten freiwerdenden hohen Wärmemengen unter der Bedingung möglichst isothermer Temperaturführung abzuführen.

Des weiteren sollten die Reaktionszeiten im Reaktor möglichst kurz und die Raum-Zeit-Ausbeute möglichst hoch sein.

Kurze Reaktionszeiten und damit verbunden kurze Verweilzeiten, von z.B. 2 bis 4 Minuten, lassen sich in Rührkesseln schwer verwirklichen, da allein schon für die Durchmischung der zugeführten Monomeren mit dem Kesselinhalt beträchtliche Zeit benötigt wird.

Bei Temperaturen unter 180°C nehmen die Mischzeiten u.a. aus Viskositätsgründen beträchtlich zu. In der EP 156 170 und EP 96 901 wird entsprechend als Untergrenze der Reaktionstemperatur im Rührkessel 180°C angegeben.

Es ist bisher kaum möglich gewesen, extrem kurze Reaktionszeiten von ca. 1 bis 2 Minuten für den Temperaturbereich oberhalb 180°C und ca. 4 bis 10 Minuten für den Temperaturbereich unterhalb 180°C einzuhalten und damit auch besonders günstige Raum-Zeit-Ausbeuten, insbesondere für acrylesterreiche Monomerengemische, zu verwirklichen.

Im Hinblick auf die Herstellung von thermisch empfindlichen Vinylpolymeren mit funktionellen Gruppen wäre es generell wünschenswert, ein Polymerisationsverfahren für Vinylpolymerisate mit geringem Molekulargewicht bereitzustellen, welches den Temperaturbereich unter 180°C zu erschließen in der Lage wäre.

Des weiteren kann durch kürzere Verweilzeiten im Reaktor die Verfärbung der Produkte reduziert werden. Insbesondere bei thermisch empfindlicheren Monomeren mit funktionellen Gruppen, z.B. Hydroxyl- oder Epoxygruppen, können durch kürzere Verweilzeiten eine Verfärbung und vorzeitig einsetzende Vernetzungsreaktionen vermieden werden.

Aufgabe der vorliegenden Erfindung war daher ein kontinuierliches Verfahren zur Herstellung von Vinylpolymeren mit geringem Molekulargewicht bei hohen Temperaturen, welches geringe Verweilzeiten und hohe Raum-Zeit-Ausbeuten unter nahezu isothermen Bedingungen ermöglicht.

Demgemäß wurde ein Verfahren zur kontinuierlichen Polymerisation von Vinylmonomeren unter Bildung von Vinylpolymeren mit einem Molekulargewicht von Mn = 1000 bis 20 000 und einem Polydispersitätswert M_{w}/Mₙ < 3,5, dadurch gekennzeichnet, daß
a. die Polymerisation in einem Ringspalt mit einer Spaltbreite von 0,5 bis 10 mm durchgeführt wird,
b. der Ringspalt auf der Innenseite von einem Rotor begrenzt wird und
c. die Polymerisation bei einer Temperatur von 110 bis 270°C durchgeführt wird,
gefunden.

Reaktoren für das erfindungsgemäße Polymerisationsverfahren können auch als Ringspaltreaktoren bezeichnet werden. Der Ringspalt wird realisiert durch die Ausstattung eines Rohrreaktors mit einem Rotor. Derartige Ringspaltreaktoren sind prinzipiell bekannt und werden z.B. von der Firma Buss SMS GmbH Verfahrenstechnik, D-6308 Butzbach angeboten.

Der Reaktionsraum, d.h. das Volumen des Ringspalts, wird im wesentlichen auch bestimmt von dem Umfang des Ringspalts und seiner Länge. Die Abmessungen können z.B. so gewählt werden, daß sich ein Reaktionsraum von 100 ml bis 10 l ergibt. Reaktoren in Produktionsanlagen können noch beträchtlich größer sein.

Der Rotor hat geeigneterweise eine kreisförmige Querschnittsfläche. Insbesondere handelt es sich beim Rotor um einen zylindrischen Einsatz im Rohrreaktor, der in seiner Länge zweckmäßigerweise dem äußeren Rohr entspricht.

Der Außenmantel und gegebenenfalls der Rotor des Ringspaltreaktors sind temperierbar, d.h. für Außen- bzw. gegebenenfalls Innenkühlung eingerichtet.

Durch den Einbau eines temperierbaren Rotors erreicht man bei den kleinen Spaltbreiten annähernd eine Verdoppelung der Wärmeaustauschfläche. Da in diesem Fall die doppelte Wärmemenge abgeführt werden kann, bietet sich die Möglichkeit, den Durchsatz zu verdoppeln.

Die Umfangsgeschwindigkeit des Rotors beträgt bevorzugt 0,5 bis 2 m/sec., besonders bevorzugt 1 bis 1,5 m/sec.

Auf dem Rotor können die Durchmischung in radialer Richtung verbessernde Aufbauten angebracht sein, wodurch der Wärmeübergang vom Reaktionsraum zur Wand verbessert wird; durch schraubenförmig angeordnete Stege kann der Rotor auch als in axialer Richtung fördernder Schraubenförderer dienen. Die Aufbauten berühren die Reaktorwand nicht.

Die Begrenzung der Spaltbreite auf den Bereich von 0,5 bis 10 mm, besonders bevorzugt 0,5 bis 7,0 mm, ganz besonders bevorzugt 1 bis 5 mm, ist eine wichtige Voraussetzung für den isothermen Charakter der angestrebten Polymerisationsreaktion.

Das Verhältnis von Wärmeaustauschfläche zum Reaktionsvolumen liegt vorzugsweise bei 30 bis 7000, besonders bevorzugt bei 200°C bis 2000 m²/m³.

Die Temperaturdifferenz zwischen Temperier- und Reaktionsmedium kann beim erfindungsgemäßen Verfahren, insbesondere kleiner 20, besonders bevorzugt kleiner 10 und ganz besonders bevorzugt kleiner 5°C gehalten werden.

Die Temperaturerhöhung in der Reaktionsmasse beträgt in Längsrichtung, d.h. in Strömungsrichtung bei den üblicherweise exothermen Polymerisationen vorzugsweise weniger als 10, insbesondere weniger als 5 und besonders bevorzugt weniger als 2°C.

Für die annähernd isotherme Reaktionsführung der Polymerisation ist auch die Dosierung der Monomeren in den Ringspalt von Bedeutung. Sie erfolgt vorzugsweise über eine oder mehrere (kreisförmig) am Reaktor angeordnete Düsen.

Vorzugsweise wird ein Teil des Produktes, beispielsweise mit Hilfe einer Zahnradpumpe an den Reaktoreintritt zurückgeführt; man erreicht damit zum einen, daß die Monomeren bei der Vermischung mit diesem zurückgeführten Teilstrom sehr schnell aufgeheizt werden. Durch eine hohe Strömungsgeschwindigkeit in diesem Kreislauf erreicht man zum anderen eine Verbesserung des isothermen Charakters der Polymerisationsreaktion, da diese Reaktorvariante im Unterschied zu einem Rohrreaktor ohne Rückführung einen deutlich niedrigeren Gradienten der Monomer- bzw. Polymerkonzentration aufweist. Das Volumen der Rückführungsleitung und der Pumpe sollte insgesamt 5 bis 10 % des Reaktorvolumens nicht überschreiten, um die Umsetzung weitgehend auf den Reaktionsraum im Ringspalt zu beschränken.

Die Produktrückführung ist besonders vorteilhaft bei Ringspaltreaktoren mit einer Spaltbreite von 1,5 bis 10 mm bzw. 3,0 bis 10 mm bei temperierbarem Außenmantel und temperierbarem Rotor.

Es hat sich als günstig erwiesen, den zurückgeführten, polymerhaltigen Volumenstrom im Außenraum eines schlanken Doppelrohres dem Reaktor zuzuführen; im Innenraum dieses Doppelrohres werden die Monomeren zudosiert; durch die Wahl eines möglichst kleinen Durchmessers im Innenrohr erreicht man, daß sich die Monomeren und der Initiator vor Eintritt in den Ringspalt nur geringfügig erwärmen.

Das Rückführungsverhältnis (der zurückgeführte Volumenstrom im Verhältnis zu dem Durchsatz durch den Ringspaltreaktor) beträgt vorzugsweise 2 bis 35, besonders bevorzugt 10 bis 30, ganz besonders bevorzugt 20 bis 30.

Grundsätzlich ist es auch möglich, zwei oder mehrere der Reaktoren des erfindungsgemäßen Verfahrens in Reihe oder auch im Kreis zu schalten. Falls einer der Reaktoren mit einer teilweisen Rückführung des Volumenstroms betrieben werden soll, wird vorzugsweise der erste Reaktor bzw. der Reaktor, in den die Monomerendosierung erfolgen soll, mit den beschriebenen Produktrückführungseinrichtungen ausgestattet. Da der zeitliche Schwerpunkt der abzuführenden Wärmemengen im ersten Teil der Reaktion liegt, wird man vorteilhafterweise bei in Reihe geschalteten Reaktoren im ersten Reaktor den Umsatz < 50 % wählen.

Das erfindungsgemäße Polymerisationsverfahren wird bei 110 bis 270°C ausgeführt. Bevorzugt ist dabei für den Fall der Anwesenheit von radikalischen Initiatoren ein Temperaturbereich von 110 bis 240°C, besonders bevorzugt von 120 bis 230°C. Die Abweichung von der gewählten Polymerisationstemperatur liegt bevorzugt unter ±5°C, insbesondere unter ±2°C.

Insbesondere im Temperaturbereich von 150 bis 270°C können Produkte mit enger Molekulargewichtsverteilung (Polydispersitätswerte M_{w}/Mₙ < 3,5, insbesondere < 2,5 ganz besonders bevorzugt < 2,0) und besonders niedrigeren Molekulargewichten (Mₙ zwischen 1000 und 10000) erhalten werden. Besonders bevorzugt zur Herstellung solcher Produkte mit enger Molekulargewichtsverteilung ist ein Temperaturbereich von 160°C bis 240°C, ganz besonders bevorzugt von 170 bis 230°C.

Die Verweilzeit hängt von der gewählten Temperatur ab.

Um Vinylpolymerisate mit einem Molekulargewicht zwischen 1000 und 20.000 herzustellen, beträgt die Verweilzeit bei Temperaturen zwischen 110 und 150°C vorzugsweise 3 bis 10, besonders bevorzugt 3 bis 8 Minuten. Bei Temperaturen oberhalb 150 bis 270°C beträgt sie vorzugsweise 1 bis 10, besonders bevorzugt 1 bis 5 Minuten.

Bei Anwendung des erfindungsgemäßen Verfahrens können die Umsätze in relativ weiten Grenzen variiert werden; z.B. im Bereich von 40 bis 95 %. Aufgrund der mit dem erfindungsgemäßen Verfahren verbundenen hohen Raum-Zeit-Ausbeuten ist das Verfahren auch bei kleineren Umsätzen wirtschaftlich. Im allgemeinen werden die Verfahrensparameter jedoch so gewählt, daß möglichst hohe Umsätze erhalten werden; um Produkte mit sehr enger Molekulargewichtsverteilung zu erhalten, kann es vorteilhaft sein, die Umsätze niedrig zu halten.

Die Druckeinstellung im Reaktor hängt ab von den eingesetzten Monomeren, Lösungsmitteln, der Temperatur und dem bei stationärem Zustand im Reaktor resultierenden Umsatz. Im allgemeinen wird das erfindungsgemäße Polymerisationsverfahren bei 3 bis 30 bar, bevorzugt bei 5 bis 20 bar, durchgeführt.

Nach der Polymerisation ist üblicherweise die Entfernung der nicht umgesetzten (wiederverwendbaren) Monomeren, der Nebenprodukte, eventuell vorhandener Initiatorzerfallsprodukte und gegebenenfalls vorhandener (wiederverwendbarer) Lösungsmittel vorgesehen.

Geeigneterweise kann dazu z.B. ein kontinuierlich betriebener in Reihe geschalteter Dünnschichtverdampfer eingesetzt werden.

Bei Anwesenheit schwerflüchtiger Monomerer wie z.B. Hydroxyalkyl(meth)acrylaten oder längerkettigen Alkylacrylaten führt der Verdampfungsschritt in Kombination mit dem erfindungsgemäßen Verfahren zu besonders niedrigen Restmonomerengehalten, verglichen mit den üblichen im Zulauf/Kessel-Polymerisationsverfahren. Wenn hohe Verdampfertemperaturen, insbesondere oberhalb 190°C notwendig werden, wie z.B. bei Produkten mit hohen Glasübergangstemperaturen der Fall, ist die Kombination des erfindungsgemäßen Verfahrens mit einer anschließenden Verdampfung der flüchtigen Bestandteile im Dünnschichtverdampfer besonders vorteilhaft.

Die abgetrennten Monomeren und Lösungsmittel können dem Prozeß wieder zugeführt werden, gegebenenfalls können Nebenprodukte wie Initiatorzerfallsprodukte und Oligomere in einem separaten Verfahrensschritt vorher abgetrennt werden.

Als Monomere für das erfindungsgemäße Verfahren kommen Vinylmonomere unterschiedlichster chemischer Struktur in Betracht. Geeignet ist das Verfahren insbesondere für acrylische Verbindungen, da letztere aufgrund ihrer besonders exothermen Polymerisationswärme hohe Anforderungen an die Konstanthaltung isothermer Bedingungen stellen.

Bevorzugt werden daher Monomerengemische eingesetzt, welche zu 60 bis 100 Gew.-%, besonders bevorzugt 80 bis 100 Gew.-% aus acrylischen Monomeren bestehen.

Als acrylische Monomere kommen z.B. (Meth)acrylsäure, C₁-C₈-Alkyl(meth)acrylate, (Meth)acrylnitril oder (Meth)acrylamid in Betracht.

Im einzelnen seien genannt:
Methyl(meth)acrylat, Ethyl(meth)acrylat, n-Propyl(meth)acrylat, Isopropyl(meth)acrylat, n-Butyl(meth)acrylat, Isobutyl(meth)acrylat, n-Amyl(meth)acrylat, Isoamyl(meth)acrylat, n-Hexyl(meth)acrylat, 2-Hydroxy(ethyl)methacrylat, 2-Hydroxypropyl(meth)acrylat, Butandiolmono(meth)acrylat, N,N-Dimethylamino(meth)acrylat, N,N-Diethylamino(meth)acrylat, t-Butylaminoethyl(meth)acrylat, 2-Sulfoethyl(meth)acrylat, Trifluorethyl(meth)acrylat, Glycidyl(meth)acrylat, Benzyl(meth)acrylat, Allyl(meth)acrylat, 2-n-Butoxyethyl(meth)acrylat, 2-Chlorethyl(meth)acrylat, tert.-Butyl(meth)acrylat, 2-Ethylbutyl(meth)acrylat, Cinnamyl(meth)acrylat, Crotyl(meth)acrylat, Cyclohexyl(meth)acrylat, Cyclopentyl(meth)acrylat, 2-Ethoxyethyl(meth)acrylat, Furfuryl(meth)acrylat, Hexafluorisopropyl(meth)acrylat, Allyl(meth)acrylat, Methallyl(meth)acrylat, 3-Methoxybutyl(meth)acrylat, 2-Methoxybutyl(meth)acrylat, 2-Nitro-2-methylpropyl(meth)acrylat, n-Octyl(meth)acrylat, 2-Ethylhexyl(meth)acrylat, 2-Phenoxyethyl(meth)acrylat, 2-Phenethyl(meth)acrylat, Phenyl(meth)acrylat, Propargyl(meth)acrylat, Tetrahydrofufuryl(meth)acrylat, Tetrahydropyranyl(meth)acrylat sowie (Meth)acrylsäure und ihre Salze, (Meth)acrylamid, (Meth)acrylnitril, N-Methyl(meth)acrylat, N-Ethyl(meth)acrylat, N,N-Dimethyl(meth)acrylamid, N,N-Diethyl(meth)acrylamid, N-Phenyl(meth)acrylamid, (Meth)acrolein, Cyclopentadienyl(meth)acrylat, Isopropylidenglyceryl(meth)acrylat, Oxazolidinyethyl(meth)acrylat, Butoxymethyl(meth)acrylamid, Isobutoxymethyl(meth)acrylamid, Methyl-α-chloracrylat, Methyl-2-cyanacrylat, N,N-Dimethylacrylamid und N,N-Diethylacrylamid.

Neben den genannten acrylischen Monomeren ist für viele Anwendungen z.B. in der Lackchemie ein Gehalt von acrylischen Monomeren mit Hydroxygruppen und/oder Epoxygruppen im Copolymerisat vorteilhaft oder erwünscht, damit die Polymeren vernetzbar sind. Geeignet sind z.B. C₁- bis C₈-Hydroxyalkyl(meth)acrylate, wie 2-Hydroxyethyl(meth)acrylat, 2-Hydroxypropyl(meth)acrylat, 2-Hydroxybutyl(meth)acrylat, n-Hydroxybutyl(meth)acrylat oder Glycidyl(meth)acrylat.

Neben den acrylischen Monomeren sind insbesondere vinylaromatische Monomere wie α-Methylstyrol, t-Butylstyrol, o-Chlorstyrol oder vor allem Styrol als Monomere für das erfindungsgemäße Verfahren von Bedeutung. Sie können sowohl allein oder auch im Gemisch, insbesondere auch mit den oben genannten Acrylmonomeren eingesetzt werden.

Weitere Vinylmonomere, die entsprechend eingesetzt werden können, sind z.B. Vinylester von Carbonsäuren mit 1 bis 20-C-Atomen, wie Vinylpropionat oder Vinylacetat, Vinylhalogenide, wie Vinylchlorid, nicht aromatische Kohlenwasserstoffe mit 2 bis 8 C-Atomen und mindestens zwei olefinischen Doppelbindungen wie Butadien oder Isopren, Vinylether, z.B. Vinylether von aliphatischen C₁- bis C₁₀-Alkoholen, wie Vinylisobutylether, heterocyclische Vinylverbindungen wie Vinylpyrrolidon oder Vinylpyridin, ungesättigte Carbonsäuren, wie Crotonsäure oder Maleinsäure, bzw. ihre Salze und Derivate.

Insbesondere eignet sich das Verfahren zur Herstellung funktioneller Polymere, die durch Selbst- oder Fremdvernetzung vernetzbar sind. Funktionelle Gruppen, welche sich für Vernetzungsreaktionen eignen sind z.B. Carboxyl, Keton- oder Aldehyd-, Amino- und insbesondere Hydroxyl- und Epoxygruppen.

Üblicherweise können vernetzbare Polymere 0,5 bis 60, insbesondere 1 bis 40 Gew.-%, besonders bevorzugt 2 bis 30 Gew.-% an Monomeren mit solchen funktionellen Gruppen enthalten. Es kann sich dabei sowohl um acrylische Monomere als auch andere Monomere handeln.

Die Polymerisation kann in Anwesenheit eines Initiators oder rein thermisch initiiert durchgeführt werden. Die Zudosierung des Initiators kann z.B. getrennt oder im Gemisch mit den Monomeren erfolgen. Vorzugsweise wird der Initiator in einem geeigneten Lösungsmittel oder den Monomeren gelöst.

Im allgemeinen werden die Initiatoren in einem molaren Verhältnis bezogen auf die Monomeren von 0,0005:1 bis 0,1:1 bevorzugt 0,001:1 bis 0,05:1 eingesetzt.

Es kommen z.B. peroxidische Verbindungen und sogenannte Azoverbindungen als Initiatoren in Frage, die Zerfallstemperatur ist geeigneterweise an die gewünschte Polymerisationstemperatur angepaßt (hohe Polymerisationstempeatur entspricht hoher Zerfallstemperatur und umgekehrt). Gegebenenfalls können die Initiatoren auch als Gemisch eingesetzt werden.

Beispielsweise genannt seien Di-t-butylperoxid, Dibenzoylperoxid, 2-Phenylazo-2,4-dimethyl-4-methoxyvaleronitril für höhere Polymerisationstemperaturen und als Initiator mit einer niedrigen Zerfallstemperatur Dioctanoylperoxid.

Bei überwiegendem Einsatz von acrylischen Monomeren wird die Polymerisation bevorzugt in Gegenwart eines Initiators durchgeführt. Für eine rein thermisch initiierte Polymerisation sind vorzugsweise Monomerengemische geeignet, die überwiegend aus vinylaromatischen Monomeren, insbesondere Styrol oder α-Methylstyrol bestehen.

Im Hinblick auf die Polymerisationstemperatur, die daraus resultierende Molekulargewichtsverteilung und z.B. auch die Farbigkeit der Produkte kann die Anwesenheit von radikalbildenden Polymerisationsinitiatoren vorteilhaft sein.

Weiterhin können z.B. auch Regler und Lösungsmittel mitverwendet werden. Lösungsmittel werden, falls gewünscht, vorzugsweise in Mengen von 0 bis 40 Gew.-%, insbesondere 0 bis 25 Gew.-%, bezogen auf die Monomeren eingesetzt. Im Bereich höherer Polymerisationstemperaturen (>150°C) werden bevorzugt sogenannte regelnde Lösungsmittel eingesetzt, also solche die in die Polymeren endständig eingebaut werden. Die anzuwendenden Mengen hängen z.B. von der Art der Monomeren, der Übertragungskonstante und den gewünschten Viskositätsverhältnissen während der Polymerisation ab.

Bei geringeren Umsätzen können auch nicht umgesetzte Monomere die Funktion des Lösungsmittels übernehmen.

Als Lösungsmittel genannt seien z.B. Alkohole oder Ether wie Ethylglykolether, Ethyldiglykolether, Ethylenglykoldimethylether, Diethylenglykoldimethylether, Triethylenglykoldimethylether, Ester wie Butylacetat, Ketone wie Methylamylketon, aromatische Alkohole wie Benzylalkohol, Methylbenzylalkohol, Cumolalkohole und Alkylaromaten wie Toluol, Xylol, Ethylbenzol, Cumol, Diisopropylbenzol, Diphenylmethan, Tetralin oder Dekalin.

Die nach dem erfindungsgemäßen Verfahren hergestellten Produkte eignen sich z.B. als Bindemittel für Überzüge wie Lacke, Schutzanstriche, Druckfarben oder Papierbeschichtungsmittel.

### Beispiel

Als Reaktor wurde ein außentemperierter Ringspaltreaktor mit einer Spaltbreite von 2 mm und einem Volumen (im Reaktionsraum) von 700 ml eingesetzt, welcher mit einem Rotor (Durchmesser 96 mm) auf dem Stege (Höhe: 1,7 mm, Länge: 90 mm) zur Förderung der Durchmischung angebracht waren, einer Vorrichtung zur Produktrückführung und 4 Temperaturmeßstellen, verteilt über die Länge des Reaktionsspaltes ausgerüstet war.

Die Dosierung der Mischung aus Monomeren, Lösungsmittel und Katalysator und die Produktrückführung erfolgte mit einem Doppelrohr, durch dessen inneres Rohr die Monomeren zudosiert und dessen äußeren Mantel der Produktstrom zurückgeführt wurde, so daß die zu dosierende Monomerenmischung von der zurückgeführten Polymerisationslösung ringförmig umschlossen wurde. Der die Eintrittstemperatur messende Temperaturfühler war nächstmöglich der Monomer-Zudosierung in den Reaktionsspalt eingebaut.

Bei einer Rotordrehzahl von 300 U/min (1,5 m/sec.) wurden die Monomerengemische a und b polymerisiert:
a.
   42,5 T Methylmethacrylat
   34,5 T Hydroxyethylacrylat
   14 T Ethylhexylacrylat
   9 T Styrol
   0,5 T Acrylsäure
b.
   23 T Methylmethacrylat
   27 T Hydroxyethylacrylat
   34,5 T n-Butylacrylat
   15 T Styrol
   0,5 T Acrylsäure

Teile (T) sind Gewichtsteile.

Die Polymerisation wurde mit 20 Gew.-% Ethyldiglykol als Lösungsmittel und 1,93 Gew.-% Ditertiärbutylperoxid jeweils bezogen auf die Monomermischung als Initiator durchgeführt.

Die Polymerisation wurde jeweils angefahren mit dem mit Lösungsmittel gefüllten und auf die gewünschte Temperatur eingestellten Reaktor. Beendet wurde die Polymerisation entsprechend durch Zudosieren von Lösungsmittel.

Die mittlere Verweilzeit im Reaktor betrug 3 bis 4 Minuten. Zur Aufarbeitung war dem Reaktionsteil ein Dünnschichtverdampfer nachgeschaltet, der bei einer Temperatur von ca. 170°C und einem Vakuum von 1 mm betrieben wurde.

Die Produkte wiesen durchweg eine Farbigkeit entsprechend einer Jodfarbzahl von 0 bis 1 auf. Gegebenenfalls wurden geringe Mengen von Gelteilchen durch Auflösen der Produkte in Xylol und anschließende Filtration abgetrennt.

Das Gewichtsmittel M_{w} des Molekulargewichts und das Zahlenmittel Mₙ des Molekulargewichts wurden durch Gelpermeationschromatographie (GPC) bestimmt, wobei Polystyrol als Standard verwendet wurde.

Die Methode ist z.B. beschrieben im Analytiker Taschenbuch Bd. 4, Seiten 433 bis 442 (Berlin 1984).

Die Verfahrens- und Stoffdaten sind in den Tabellen 1 und 2 aufgelistet.

**Tabelle 1**

| Monomerengemisch a | | | | | | |
|---|---|---|---|---|---|---|
| Durchgänge | | | | | | |
| | | a1 | a2 | a3 | a4 | a5 |
| Eintrittstemperatur T1 | °C | 197 | 202 | 189 | 189 | 210 |
| Zwischentemperatur T2 | °C | 218 | 217 | 200 | 200 | 218 |
| Zwischentemperatur T3 | °C | 218 | 216 | 199 | 199 | 218 |
| Austrittstemperatur T4 | °C | 216 | 215 | 198 | 198 | 214 |
| Manteltemperatur | °C | 218 | 216 | 200 | 200 | 198 |
| Druck | bar | 5 | 5 | 4 | 5 | 4,5 |
| | | | | | | |
| Durchsatz (D) | kg/h | 9,6 | 4,78 | 9,75 | 13,5 | 5,3 |
| Rückführungsvolumenstrom (R) | 1/h | 167 | 127 | 115 | 166 | 165 |
| Rückführungsverhältnis (R/D) | | 17,4 | 26,6 | 11,8 | 12,3 | 31 |
| Umsatz (Doppelbest.) | % | 87/93 | 91/95 | 66/73 | 66/72 | 88/84 |
| Molekulargewicht M_{w} (Gewichtsmittel) | M_{w} | 3800 | 3890 | 5500 | 5900 | 3900 |
| Molekulargewicht Mₙ (Zahlenmittel) | Mₙ | 1800 | 1910 | 2400 | 2500 | 1800 |
| M_{w}/Mₙ | | 2,10 | 2,04 | 2,30 | 2,36 | 2,1 |

**Tabelle 2**

| Monomerengemisch b | | | | | | |
|---|---|---|---|---|---|---|
| Durchgänge | | | | | | |
| | | b1 | b2 | b3 | b4 | b5 |
| Eintrittstemperatur T1 | °C | - | 211 | 199 | 189 | 192 |
| Zwischentemperatur T2 | °C | 200 | 218 | 199 | 199 | 199 |
| Zwischentemperatur T3 | °C | 200 | 219 | 199 | 199 | 199 |
| Austrittstemperatur T4 | °C | - | 217 | 200 | 198 | 197 |
| Manteltemperatur | °C | 200 | 218 | 199 | 199 | 199 |
| Druck | bar | - | 5 | 5 | 4 | 4 |
| | | | | | | |
| Durchsatz (D) | kg/h | 9,5 | 9,5 | 13,7 | 9,4 | 5,5 |
| Rückführungsvolumenstrom (R) | 1/h | 167 | 167 | 175 | 166 | 166 |
| Rückführungsverhältnis (R/D) | | 18 | 18 | 13 | 18 | 30 |
| Umsatz (Doppelbest.) | % | 87/92 | 96/95 | 86/92 | 84/90 | 89/- |
| Molekulargewicht M_{w} (Gewichtsmittel) | M_{w} | 6300 | 4700 | 6900 | 9900 | 7000 |
| Molekulargewicht Mₙ (Zahlenmittel) | Mₙ | 2600 | 2100 | 2800 | 3100 | 2800 |
| M_{w}/Mₙ | | 2,4 | 2,2 | 2,5 | 3,2 | 2,5 |

## Patentansprüche

1. Verfahren zur kontinuierlichen Polymerisation von Vinylmonomeren unter Bildung von Vinylpolymeren mit einem Molekulargewicht von Mn = 1000 bis 20 000 und einem Polydispersitätswert M_{w}/Mₙ < 3,5, dadurch gekennzeichnet, daß
a. die Polymerisation in einem Ringspalt mit einer Spaltbreite von 0,5 bis 10 mm durchgeführt wird,
b. der Ringspalt auf der Innenseite von einem Rotor begrenzt wird und
c. die Polymerisation bei einer Temperatur von 110 bis 270°C rein thermisch initiert oder in Gegenwart von radikalischen Initiatoren durchgeführt wird.

2. Verfahren nach Anspruch 1, dadurch gekennzeichnet, daß die Polymerisation bei 150 bis 270°C durchgeführt wird, und der Polydispersitätswert M_{w}/Mₙ des erhaltenen Vinylpolymeren < 3,5 ist.

3. Verfahren nach Anspruch 1 oder 2, dadurch gekennzeichnet, daß ein Teil des Volumenstroms durch den Ringspalt im Kreis geführt wird, wobei das Rückführungsverhältnis von zurückgeführtem Volumenstrom zum Durchsatz durch den Ringspalt 2 bis 35 beträgt.

4. Verfahren nach einem der Ansprüche 1 bis 3, dadurch gekennzeichnet, daß der Rotor mit einer Umfangsgeschwindigkeit von 0,5 bis 2 m/sec. bewegt wird.

5. Verfahren nach einem der Ansprüche 1 bis 4, dadurch gekennzeichnet, daß der Rotor mit die Durchmischung fördernden Aufbauten ausgelegt ist.

6. Verfahren nach einem der Ansprüche 1 bis 5, dadurch gekennzeichnet, daß die Polymerisation in Anwesenheit von 0 bis 40 Gew.-%, bezogen auf die eingesetzten Monomeren, eines Lösungsmittels durchgeführt wird.

7. Verfahren nach einem der Ansprüche 1 bis 6, dadurch gekennzeichnet, daß das zur Polymerisation eingesetzte Monomerengemisch zu 60 bis 100 Gew.-% aus (Meth)acrylsäureestern besteht.

8. Verfahren nach einem der Ansprüche 1 bis 7, dadurch gekennzeichnet, daß ein Polymerisationsinitiator in einem molaren Verhältnis zu den Monomeren von 0,0005:1 bis 0,1:1 eingesetzt wird.

## Claims

1. A process for the continuous polymerization of vinyl monomers to form vinyl polymers having a molecular weight Mn of from 1000 to 20,000 and a polydispersity value M_{w}/Mₙ < 3.5, characterized in that
a. the polymerization is carried out in an annular gap from 0.5 to 10 mm in width,
b. the annular gap is bounded on the inside by a rotor, and
c. the polymerization is carried out at from 110 to 270°C by purely thermal initiation or in the presence of free radical initiators.

2. A process as claimed in claim 1, charaterized in that the polymerization is carried out at from 150 to 270°C and the polydispersity value M_{w}/Mₙ of the resulting vinyl polymer is < 3.5.

3. A process as claimed in claim 1 or 2, charaterized in that some of the stream through the annular gap is recycled, the ratio of recyclate to throughput through the annular gap being from 2:1 to 35:1.

4. A process as claimed in any of claims 1 to 3, charaterized in that the rotor has a circumferential speed of from 0.5 to 2 m/s.

5. A process as claimed in any of claims 1 to 4, charaterized in that the rotor has mixer attachments.

6. A process as claimed in any of claims 1 to 5, charaterized in that the polymerization is carried out in the presence of from 0 to 40% by weight, based on the monomers used, of a solvent.

7. A process as claimed in any of claims 1 to 6, charaterized in that the monomer mixture to be polymerized is from 60 to 100% by weight (meth)acrylic ester.

8. A process as claimed in any of claims 1 to 7, charaterized in that a polymerization initiator is used in a molar ratio to monomer of from 0.0005:1 to 0.1:1.

## Revendications

1. Procédé de polymérisation continue de monomères vinyliques, sous formation de polymères vinyliques d'un poids moléculaire Mn = 1000 à 20.000 et d'un indice de polydispersité Mₚ/Mₙ < 3,5, caractérisé en ce que
a. on entreprend la polymérisation dans une fente annulaire avec une largeur de fente de 0,5 à 10 mm,
b. on limite la fente annulaire du côté interne d'un rotor et
c. on amorce la polymérisation de manière purement thermique à une température de 110 à 270°C, ou bien on l'entreprend en présence d'amorceurs radicalaires.

2. Procédé suivant la revendication 1, caractérisé en ce que l'on entreprend la polymérisation à une température de 150 à 270°C et l'indice de polydispersité Mₚ/Mₙ du polymere vinylique obtenu est < 3,5.

3. Procédé suivant la revendication 1 ou 2, caractérisé en ce que l'on recycle une partie du courant volumique à travers la fente annulaire, où le rapport de recyclage du courant volumique recyclé au passage à travers la fente annulaire varie de 2 à 35.

4. Procédé suivant l'une quelconque des revendications 1 à 3, caractérisé en ce que le rotor se déplace avec une vitesse de rotation périphérique de 0,5 à 2 m/sec.

5. Procédé suivant l'une quelconque des revendications 1 4, caractérisé en ce que le rotor est équipé d'ailettes ou aubes favorisant le mélange intime.

6. Procédé suivant l'une quelconque des revendications 1 à 5, caractérisé en ce que l'on entreprend la polymérisation en présence de 0 à 40% en poids, par rapport aux monomères mis en oeuvre, d'un solvant.

7. Procédé suivant l'une quelconque des revendications 1 à 6, caractérisé en ce que le mélange des monomères mis en oeuvre pour la polymérisation se compose pour jusqu'à 60 à 100% en poids d'esters de l'acide (méth)acrylique.

8. Procédé suivant l'une quelconque des revendications 1 à 7, caractérisé en ce que l'on utilise un amorceur de polymérisation en un rapport molaire vis-à-vis des monomères de 0,0005:1 à 0,1:1.
